# EUROPÄISCHE PATENTSCHRIFT

(11) **EP 2 042 408 B1**
(45) Veröffentlichungstag und Bekanntmachung des Hinweises auf die Patenterteilung: **04.05.2011**
(21) Anmeldenummer: 08012072.8
(22) Anmeldetag: 04.07.2008
(51) Int. Cl.: B62D 25/08

(54) **Überrollschutzeinrichtung**
Roll-over device
Système d'arceau de sécurité

(30) Priorität: 28.09.2007 DE 102007046536
(43) Veröffentlichungstag der Anmeldung: 01.04.2009
(73) Patentinhaber: Dr. Ing. h.c. F. Porsche AG, 70435 Stuttgart (DE)
(72) Erfinder: Vlahovic, Josip, Dr., 71691 Freiberg Am Neckar (DE); Oezkan, Ali, 71229 Leonberg (DE); Bohnert, Klaus, 75417 Muehlacker (DE)

(56) Entgegenhaltungen:
- EP-A1- 1 902 909
- WO-A2-2005/080142
- US-A1- 2006 290 124
- US-A1- 2006 290 125

## Beschreibung

Die vorliegende Erfindung betrifft eine hinter den Fahrzeugsitzen eines Kraftfahrzeuges, insbesondere eines Cabriolets mit einem Verdeck, angeordnete Überrollschutzeinrichtung gemäß dem Oberbegriffs des Anspruchs 1. Die Erfindung betrifft außerdem ein mit einer derartigen Überrollschutzeinrichtung ausgestattetes Kraftfahrzeug.

Aus der EP 0 722 859 B1 ist eine Überrollschutzeinrichtung bekannt, welche zumindest eine vorgefertigte, einen Schutzbügel und einen Aktuator enthaltende Überrollschutzkassette und einen Überrollsensor umfasst. Die Überrollschutzkassette ist dabei zusammen mit dem Schutzbügel und dem Aktuator sowie einem Überrollsensor außerhalb des Kraftfahrzeuges an einem die Aufnahme bildenden Tragrahmen befestigt und bildet ein vorverkabeltes, funktionsfähiges Modul, welches außerhalb des Fahrzeugs testbar und anschließend am Fahrzeugaufbau festlegbar ist. Die Überrollschutzkassette wird dabei vor dem Tragrahmen angeordnet und in dieser Stellung mit diesem verbunden. Um die für das Cabriolet erforderliche Steifigkeit erzielen zu können, muss der Tragrahmen eine gewisse Profilstärke aufweisen, wodurch die Überrollschutzkassette zusammen mit dem Tragrahmen einen nicht unerheblichen Bauraum in Fahrzeuglängsrichtung beansprucht.

Aus der EP 1 582 421 A2 ist eine weitere Überrollschutzeinrichtung bekannt, bei welcher an einem in Fahrzeugquerrichtung verlaufenden Träger feste, d.h. nicht ausfahrbare Überrollbügel angeordnet sind. Die Anbindung der Überrollschutzeinrichtung erfolgt dabei jeweils längsendseitig über Schrauben an entsprechenden fahrzeugseitigen Konsolen.

In der US 2006/290124 A1 ist eine hinter den Fahrzeugsitzen eines Kraftfahrzeuges, insbesondere eines Cabriolets mit einen Verdeck, angeordnete Überrollschutzeinrichtung beschrieben, die zumindest eine einenÜberrollbügel enthaltende Überrollschutzkassette aufweist, wobei die zumindest eine Überrollschutzkassette oder ein Gehäuse derselben tragender Bestandteil eines mehrteilig aufgebauten und sich in Fahrzeugquerrichtung erstreckenden Aussteifungsträgers ist.
Eine ähnlich aufgebaute Überrollschutzeinrichtung ist auch der US 2006/290125 A1 zu entnehmen.

Aus der EP 1 902 909 A1 geht eine Überrollschutzeinrichtung für ein Kraftfahrzeug hervor, die sich aus seitlich außenliegenden, vertikal ausgerichteten Überrollschutzkassetten und einem querverlaufenden Verbindungsprofil zusammensetzt, wobei die beiden Überrollschutzkassetten jeweils über einen Anbindungsarm mit einer vorgelagerten B-Säule des Aufbau verbunden sind.

Die vorliegende Erfindung beschäftigt sich mit dem Problem, für eine gattungsgemäße Überrollschutzeinrichtung eine verbesserte oder zumindest eine andere Ausführungsform anzugeben, welche sich insbesondere durch einen reduzierten Bauraumbedarf auszeichnet.

Die Erfindung löst dieses Problem durch den Gegenstand des unabhängigen Anspruchs 1. Vorteilhafte Ausführungsformen sind Gegenstand der abhängigen Ansprüche.

Die Erfindung beruht auf dem allgemeinen Gedanken, die Überrollschutzeinrichtung bzw. zumindest eine Komponente davon, nämlich eine Überrollschutzkassette, als tragenden Bestandteil in einen sich in Fahrzeugquerrichtung erstreckenden Aussteifungsträger zu integrieren. Die erfindungsgemäße Überrollschutzeinrichtung weist dabei zumindest eine, vorzugsweise zwei, jeweils einen Überrollbügel enthaltende Überrollschutzkassetten auf, welche einen Bestandteil des mehrteilig aufgebauten Aussteifungsträgers bildet. Die Überrollschutzkassette wird somit nicht an einen bereits vorhandenen und sich in Fahrzeugquerrichtung erstreckenden Tragrahmen angeschraubt bzw. angeschweißt, sondern bildet einen integralen Bestandteil eines derartigen sich in Querrichtung erstreckenden Tragrahmens. Dies bietet den besonderen Vorteil, dass der von der erfindungsgemäßen Überrollschutzeinrichtung benötigte Bauraum, insbesondere in Fahrzeuglängsrichtung, erheblich reduziert werden kann, da nicht wie bisher die Überrollschutzkassette und der Tragrahmen in Fahrtrichtung hintereinander angeordnet sind.

Gemäß der Erfindung weist die Überrollschutzeinrichtung ein plattenartiges Versteifungselement auf, über welches sie sich in Fahrzeugslängsrichtung nach hinten, insbesondere gegen eine Verdeckablage, abstützt. Hierdurch kann eine zusätzliche Aussteifung des durch die Überrollschutzeinrichtung gebildeten und sich in Fahrzeugquerrichtung erstreckenden Tragrahmens erreicht werden. Um die Aussteifungswirkung weiter zu erhöhen, kann das plattenartige Versteifungselement beispielsweise Versteifungsrippen aufweisen, welche entsprechend einem vorab berechneten Belastungsprofil ausgerichtet sind. Durch das plattenartige Versteifungselement kann somit nicht nur eine Drei-, sondern gleich eine Mehrpunktlagerung der Überrollschutzeinrichtung erreicht werden, wodurch sich eine besonders gute Aussteifung des Cabriolets erreichen lässt.

Bei einer weiteren vorteilhaften Ausführungsform der erfindungsgemäßen Lösung umfasst die Überrollschutzeinrichtung zumindest folgende Komponenten: Zwei Überrollschutzkassetten, ein sich in Fahrzeugquerrichtung erstreckendes und zwischen den beiden Überrollschutzkassetten angeordnetes Verbindungsprofil sowie zwei Anbindungsarme, über welche die beiden Überrollschutzkassetten an eine Fahrzeugstruktur angebunden werden können. In Fahrzeugquerrichtung ist somit die erfindungsgemäße Überrollschutzeinrichtung wie folgt aufgebaut: An einen linken Anbindungsarm schließt sich die linke Überrollschutzkassette an, wobei an deren, dem linken Anbindungsarm abgewandten Seite das Verbindungsprofil angeschlossen ist. An das Verbindungsprofil schließt sich nunmehr die rechte Überrollschutzkassette und an diese der rechte Anbindungsarm an. Im vorliegenden Fall ist somit die erfindungsgemäße Überrollschutzeinrichtung spiegelbildlich aufgebaut. Selbstverständlich ist dabei denkbar, dass einzelne Komponenten, wie beispielsweise die Anbindungsarme oder das zwischen den beiden Überrollschutzkassetten angeordnete Verbindungsprofil an unterschiedlichste Fahrzeugvarianten angepasst ist, während beispielsweise die beiden Überrollschutzkassetten standardmäßig für alle Cabrioversionen verwendet werden.

Zweckmäßig verläuft ein in Fahrtrichtung nach vorne abgewickelter Bereich zumindest eines Anbindungsarms etwa waagerecht oder schräg nach unten und ist daher in einem oberen, einem mittleren oder einem unteren Bereich einer B-Säule an diese angebunden. Das heißt, die jeweils längsseitige Anbindung der Überrollschutzeinrichtung lässt sich an individuelle Anforderungen anpassen, wobei je nach gewähltem Anbindungspunkt eine zusätzliche Aussteifung des Kraftfahrzeugs in Fahrzeugquerrichtung über die Anbindungsarme erfolgen kann. Eine besonders gute Aussteifung des Cabriolets in Fahrzeugquerrichtung wird dabei vorzugsweise bei einem etwa waagerecht verlaufenden abgewinkelten Bereich des zumindest einen Anbindungsarms und damit einer Anbindung des Anbindungsarms in einem oberen Bereich der B-Säule erreicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Überrollschutzeinrichtung in einem in ein Kraftfahrzeug eingebauten Zustand,
- Fig. 2: eine Detaildarstellung der Überrollschutzeinrichtung,
- Fig. 3a bis 3c: unterschiedliche Ausführungsformen von Überrollschutzkassetten,
- Fig. 4: eine Darstellung wie in Fig. 2, jedoch bei einer anderen Ausführungsform, insbesondere mit anderen Anbindungsarmen.

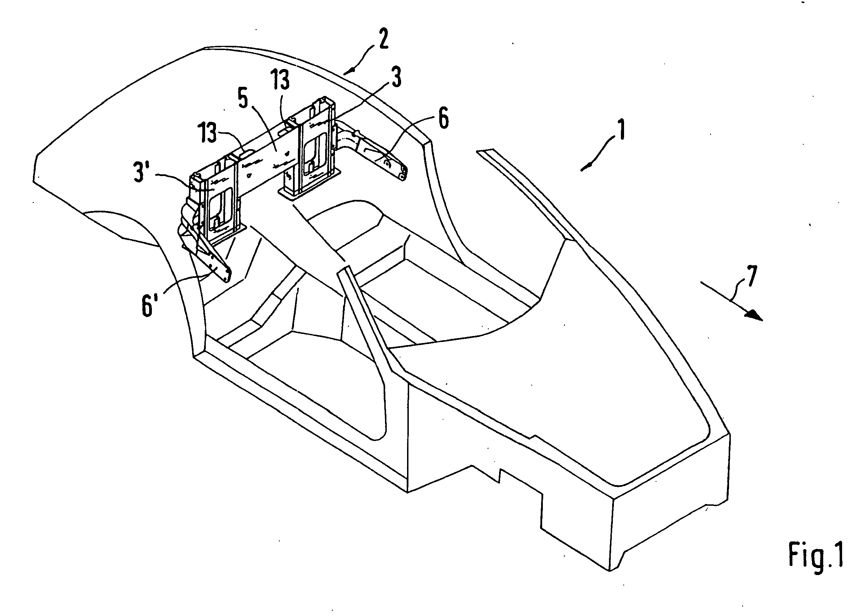

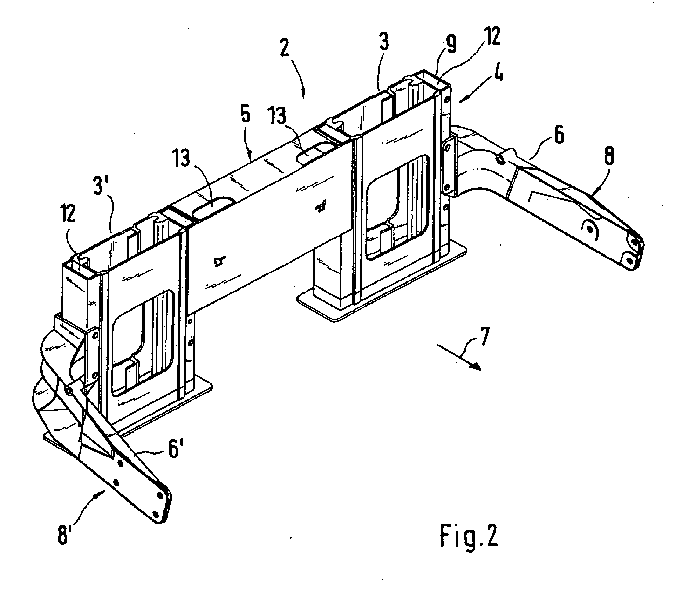

Entsprechend Fig. 1 weist ein als Cabriolet ausgebildetes Kraftfahrzeug 1 im Bereich hinter nicht gezeigten Fahrzeugsitzen eine Überrollschutzeinrichtung 2 auf. Die Überrollschutzeinrichtung 2 wird dabei von einem nicht dargestellten Sensor ausgelöst, sofern eine, einen Überschlag des Kraftfahrzeugs 1 auslösende Bewegung erfolgt. Die Überrollschutzeinrichtung 2 weist ebenfalls nicht dargestellte ausfahrbare Überrollbügel auf, welche in Überrollschutzkassetten 3, 3' angeordnet sind und lediglich im Bedarfsfall ausgefahren werden. Eine Detaildarstellung der gemäß Fig. 1 ausgeführten Überrollschutzeinrichtung 2 ist in Fig. 2 dargestellt.

Erfindungsgemäß ist nun zumindest eine Überrollschutzkassette 3, und sofern das Kraftfahrzeug 1 zwei Überrollschutzkassetten 3, 3' besitzt, beide, oder eine Gehäuse derselben als tragender Bestandteil eines mehrteilig aufgebauten und sich in Fahrzeugquerrichtung erstreckenden Aussteifungsträger 4 ausgebildet. Dies bietet den großen Vorteil, dass die beiden Überrollschutzkassetten 3, 3' nicht in Fahrtrichtung vor oder hinter einem Querträger angeordnet werden müssen, was zu einem erhöhten Bauraumbedarf in Fahrzeuglängsrichtung führt.

Betrachtet man die Fig. 2, so kann man erkennen, dass die Überrollschutzeinrichtung 2 aus zwei Überrollschutzkassetten 3, 3' sowie einem sich in Fahrzeugquerrichtung erstreckenden und zwischen den beiden Überrollschutzkassetten 3, 3' angeordneten Verbindungsprofil 5 besteht. Darüber hinaus ist auf der dem Verbindungsprofil 5 abgewandten Seite der Überrollschutzkassette 3 ein Anbindungsarm 6 angeordnet, über welchen der Aussteifungsträger 4, insbesondere die Überrollschutzkassette 3 an eine Fahrzeugsstruktur angebunden ist. Auf der gegenüberliegenden Seite ist der Anbindungsarm 6' in gleicher Weise mit der Fahrzeugstruktur bzw. der Überrollschutzkassette 3' verbunden. Untereinander können die einzelnen Komponenten 3, 3', 5, 6, 6' beispielsweise miteinander verschweißt, verschraubt oder vernietet sein. Ausgebildet sind die Komponenten der Überrollschutzeinrichtung 2 vorzugsweise aus Metall, insbesondere aus Leichtmetall oder aus Guss, um einerseits die erforderliche Steifigkeit bereitstellen zu können und andererseits das Gewicht der erfindungsgemäßen Überrollschutzeinrichtung 2 möglichst gering halten zu können.

In einem jeweiligen Fußbereich der beiden Überrollschutzkassetten 3, 3' sind diese an eine Fahrzeugtragstruktur, insbesondere an eine Sitzmulde oder einen Fahrzeugquerträger angebunden, wodurch eine zusätzliche Aussteifung erreicht werden kann.

Betrachtet man die Fig. 1 und 2, so fällt auf, dass die beiden Anbindungsarme 6 und 6' in Fahrtrichtung 7 nach vorne abgewinkelt ausgebildet sind, wobei sie mit ihrem abgewinkelten Bereich 8, 8' an eine nicht gezeigte B-Säule des Kraftfahrzeugs 1 und/oder ein Verdecklager und/oder einen Radkasten angebunden sind. Die beiden Anbindungsarme 6, 6' sind dabei profiliert ausgebildet, wodurch deren Steifigkeit gesteigert werden kann. Je nach Ausführungsform bzw. je nach Variante des Kraftfahrzeugs 1 kann vorgesehen sein, dass die in Fahrtrichtung 7 nach vorne abgewinkelten Bereiche 8, 8' der Anbindungsarme 6, 6' etwa waagegerecht, wie dies in Fig. 2 gezeigt ist, oder schräg nach unten verlaufen und dadurch in einem oberen, einem mittleren oder einem unteren Bereich der B-Säule an diese angebunden sind. Zur Anbindung weisen die abgewinkelten Bereiche 8, 8' eine im wesentliche ebene Anlagefläche auf, welche mit Durchgangsöffnungen zum Durchführen von Verbindungsmitteln, insbesondere von Schrauben, versehen ist.

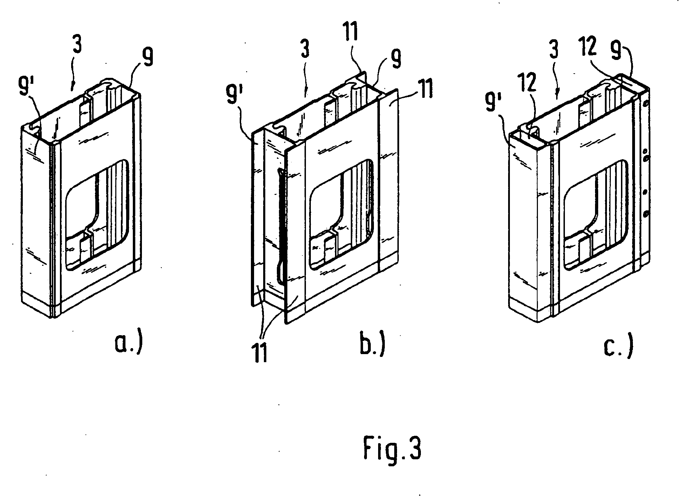

Gemäß den Fig. 3a bis 3c sind unterschiedliche Ausführungsformen der Überrollschutzkassetten 3 dargestellt, wobei in Fig. 3b von seitlichen Wandungen 9 bzw. 9' der Überrollschutzkassette 3 jeweils zwei seitlich vorstehende Flansche 11 weggeführt sind, während die seitlichen Wandungen 9, 9' bei der Überrollschutzkassette 3 gemäß der Fig. 3c als Hohlprofil 12 ausgebildet sind. Demgegenüber sind die seitlichen Wandungen 9, 9' bei der Überrollschutzkassette 3 gemäß der Fig. 3a als lediglich dünne Wand ausgebildet, ohne zusätzlich versteifende Querschnittsprofile. Im Vergleich zur Überrollschutzkassette 3 gemäß der Fig. 3a weisen die Überrollschutzkassetten 3 gemäß den Fig. 3b und 3c eine erhöhte Steifigkeit auf.

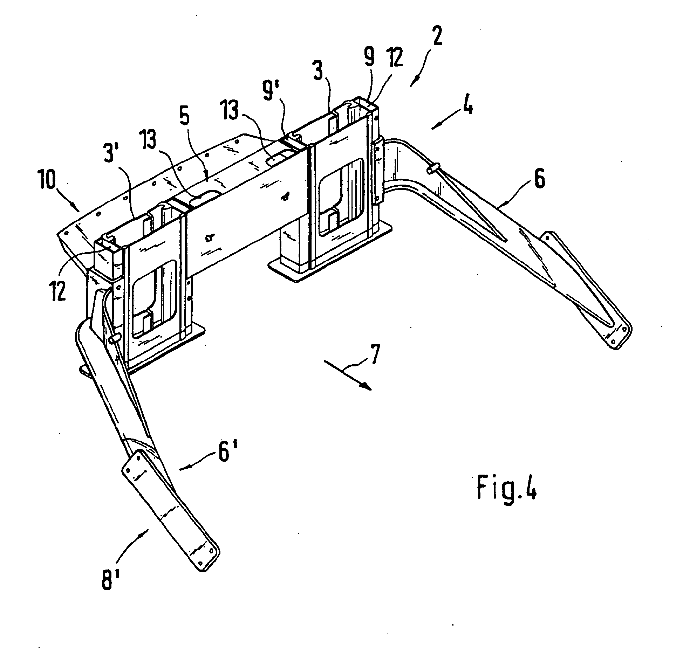

Je nach Ausführungsform der seitlichen Wandungen 9, 9' der Überrollschutzkassette 3 sind entsprechende Anbindungsbereiche des Verbindungsprofils 5 bzw. der Anbindungsarme 6, 6' ausgebildet, so dass diese Anbindungsbereiche beispielsweise gemäß Fig. 4 einen U-förmigen Querschnitt aufweisen und die Überrollschutzkassette 3 an drei Seiten umfassend umgreifen.

Generell ist denkbar, dass zumindest eine der Komponenten, beispielsweise die Überrollschutzkassetten 3 oder das Verbindungsprofil 5 der Überrollschutzeinrichtung 2 als Strangpressprofile ausgebildet sind. Ebenso ist denkbar, dass beispielsweise die Anbindungsarme 6, 6', wie dies in Fig. 2 gezeigt ist, als profilierte Träger ausgebildet sind oder aber, wie dies in Fig. 4 gezeigt ist, einen rohrförmigen Querschnitt aufweisen. Beide gewählte Querschnittsformen verleihen den Anbindungsarmen 6, 6' eine deutlich erhöhte Steifigkeit. Im Unterschied zur Überrollschutzeinrichtung 2 gemäß der Fig. 2 weist die Überrollschutzeinrichtung 2 gemäß der Fig. 4 zusätzlich ein in Fahrtrichtung 7 nach hinten abstehendes, plattenartiges Versteifungselement 10 auf, über welches sich die Überrollschutzeinrichtung 2 in Fahrzeuglängsrichtung nach hinten, insbesondere an einer Verdeckablage abstützt.

Im Unterschied zu aus dem Stand der Technik bekannten Überrollschutzeinrichtungen, weist die erfindungsgemäße Überrollschutzeinrichtung 2 einen in Fahrzeuglängsrichtung deutlich verkürzten Bauraumbedarf auf, da die Überrollschutzkassetten 3, 3' bzw. das Verbindungsprofil 5 nicht parallel in Fahrzeugquerrichtung vor oder hinter einem Querträger angeordnet sind, sondern diesen ersetzen.

Aus Fig. 2 ist ersichtlich, dass in seitlich außenliegenden Bereichen des sich in Fahrzeugquerrichtung erstreckenden Verbindungsprofiles 5 nicht näher dargestellte Gurtroller eines Sicherheitsgurtsystems angeordnet sind. Die beiden Gurtroller sind im Hohlraum des Verbindungsprofiles 5 angeordnet und dort befestigt. An der Oberseite des Verbindungsprofiles 5 sind örtlich Austrittsöffnungen 13 für die Gurtbänder vorgesehen.

## Patentansprüche

1. Hinter den Fahrzeugsitzen eines Kraftfahrzeuges (1), insbesondere eines Cabriolets mit einem Verdeck, angeordnete Überrollschutzeinrichtung (2), die zumindest eine, einen Überrollbügel enthaltende Überrollschutzkassette (3) aufweist, wobei die zumindest eine Überrollschutzkassette (3) oder ein Gehäuse derselben tragender Bestandteil eines mehrteilig aufgebauten und sich in Fahrzeugquerrichtung erstreckenden Aussteifungsträgers (4) ist, **dadurch gekennzeichnet, dass** die Überrollschutzeinrichtung (2) ein plattenartiges Versteifungselement (10) aufweist, über welches sie sich in Fahrzeuglängsrichtung (7) nach hinten, insbesondere gegen eine Verdeckablage abstützt.

2. Überrollschutzeinrichtung nach Anspruch 1, **dadurch gekennzeichnet, dass** diese zumindest folgende Komponenten umfasst;
- zwei Überrollschutzkassetten (3, 3'),
- ein sich in Fahrzeugquerrichtung erstreckendes und zwischen den beiden Überrollschutzkassetten (3, 3') angeordnetes Verbindungsprofil (5) sowie
- zwei Anbindungsarme (6, 6'), über welche die beiden Überrollschutzkassetten (3, 3') an eine Fahrzeugtragstruktur angebunden sind.

3. Überrollschutzeinrichtung nach Anspruch 2, **dadurch gekennzeichnet, dass** die Komponenten der Überrollschutzeinrichtung (2) miteinander verschweißt, verschraubt oder vernietet sind.

4. Überrollschutzeinrichtung nach Anspruch 2 oder 3, **dadurch gekennzeichnet, dass** die Komponenten der Überrollschutzeinrichtung (2) aus Metall, insbesondere aus Leichtmetall oder aus Guss ausgebildet sind.

5. Überrollschutzeinrichtung nach einem der Ansprüche 1 bis 4 **dadurch gekennzeichnet, dass** zumindest eine Überrollschutzkassette (3, 3') oder deren Gehäuse im Fußbereich an eine Fahrzeugtragstruktur, insbesondere an eine Sitzmulde oder einen Querträger angebunden ist.

6. Überrollschutzeinrichtung nach einem der Ansprüche 2 bis 5 **dadurch gekennzeichnet, dass** zumindest einer der beiden Anbindungsarme (6, 6') in Fahrtrichtung (7) nach vorne abgewinkelt ausgebildet ist und mit seinem der Überrollschutzkassette (3, 3') abwandten Ende an eine B-Säule und/oder ein Verdecklager und/oder einen Radkasten angebunden ist.

7. Überrollschutzeinrichtung nach Anspruch 6 **dadurch gekennzeichnet, dass** der in Fahrtrichtung (7) nach vorne abgewinkelt Bereich (8, 8') des zumindest einen Anbindungsarms (6, 6')etwa waagerecht oder schräg nach unten verläuft und in einem oberen, einem mittleren oder einem unteren Bereich der B-Säule an diese angebunden ist.

8. Überrollschutzeinrichtung nach einem der Ansprüche 2 bis 7 **dadurch gekennzeichnet, dass** zumindest eine der Komponenten der Überrollschutzeinrichtung (2) als Strangpressprofil ausgebildet ist.

9. Kraftfahrzeug mit einer Überrollschutzeinrichtung (2) nach einem der Ansprüche 1 bis 8.

## Claims

1. Rollover protection device (2) which is arranged behind the vehicle seats of a motor vehicle (1), in particular a convertible with a convertible top, and has at least one rollover protection cassette (3) containing a rollbar, the at least one rollover protection cassette (3) or a housing of the same being a supporting component of a stiffening support (4) which is of multi-part construction and extends in the transverse direction of the vehicle, **characterized in that** the rollover protection device (2) has a platelike stiffening element (10) via which it is supported to the rear in the longitudinal direction (7) of the vehicle, in particular against a convertible top store.

2. Rollover protection device according to Claim 1, **characterized in that** it comprises at least the following components:
- two rollover protection cassettes (3, 3'),
- a connecting profile (5) which extends in the transverse direction of the vehicle and is arranged between the two rollover protection cassettes (3, 3'), and
- two joining arms (6, 6') via which the two rollover protection cassettes (3, 3') are joined to a supporting structure of the vehicle.

3. Rollover protection device according to Claim 2, **characterized in that** the components of the rollover protection device (2) are welded, screwed, or riveted to one another.

4. Rollover protection device according to Claim 2 or 3, **characterized in that** the components of the rollover protection device (2) are formed from metal, in particular from light metal or from cast metal.

5. Rollover protection device according to one of Claims 1 to 4, **characterized in that** at least one rollover protection cassette (3, 3') or the housing thereof is joined in the foot region to a supporting structure of the vehicle, in particular to a seat trough or a crossmember.

6. Rollover protection device according to one of Claims 2 to 5, **characterized in that** at least one of the two joining arms (6, 6') is designed such that it is angled forward in the direction of travel (7) and is joined at its end facing away from the rollover protection cassette (3, 3') to a B pillar and/or to a convertible top bearing and/or to a wheelhouse.

7. Rollover protection device according to Claim 6, **characterized in that** that region (8, 8') of the at least one joining arm (6, 6') which is angled forward in the direction of travel (7) runs approximately horizontally or obliquely downward and is joined to the B pillar in an upper, a central or a lower region thereof.

8. Rollover protection device according to one of Claims 2 to 7, **characterized in that** at least one of the components of the rollover protection device (2) is designed as an extruded profile.

9. Motor vehicle with a rollover protection device (2) according to one of Claims 1 to 8.

## Revendications

1. Système de protection contre le capotage (2) disposé derrière les sièges d'un véhicule automobile (1), en particulier d'un cabriolet avec une capote, qui présente au moins une cassette de protection contre le capotage (3) contenant un arceau de sécurité, l'au moins une cassette de protection contre le capotage (3) ou un boîtier de celle-ci étant un constituant portant d'un support de renforcement (4) réalisé en plusieurs parties et s'étendant dans la direction transversale du véhicule, **caractérisé en ce que** le système de protection contre le capotage (2) présente un élément de renforcement de type plaque (10) par le biais duquel il s'appuie dans la direction longitudinale du véhicule (7) vers l'arrière, notamment contre un compartiment de rangement de capote.

2. Système de protection contre le capotage selon la revendication 1, **caractérisé en ce que** celui-ci comprend au moins les composants suivantes :
- deux cassettes de protection contre le capotage (3, 3'),
- un profilé de connexion (5) s'étendant dans la direction transversale du véhicule et disposé entre les deux cassettes de protection contre le capotage (3, 3'), ainsi que
- deux bras de raccordement (6,6') par le biais desquels les deux cassettes de protection contre le capotage (3, 3') sont rattachées à une structure portante du véhicule.

3. Système de protection contre le capotage selon la revendication 2, **caractérisé en ce que** les composants du système de protection contre le capotage (2) sont soudés ensemble, vissés, ou rivetés.

4. Système de protection contre le capotage selon la revendication 2 ou 3, **caractérisé en ce que** les composants du système de protection contre le capotage (2) sont réalisés en métal, notamment en métal léger ou en fonte.

5. Système de protection contre le capotage selon l'une quelconque des revendications 1 à 4, **caractérisé en ce qu'**au moins une cassette de protection contre le capotage (3, 3') ou son boîtier est raccordé(e) dans la région de la base à une structure portante du véhicule, notamment à un creux de siège ou une traverse.

6. Système de protection contre le capotage selon l'une quelconque des revendications 2 à 5, **caractérisé en ce qu'**au moins l'un des deux bras de raccordement (6, 6') est réalisé sous forme coudée vers l'avant dans la direction de conduite (7), et est raccordé par son extrémité opposée à la cassette de protection contre le capotage (3, 3') à une colonne B et/ou un support de capote et/ou un couvre-roue.

7. Système de protection contre le capotage selon la revendication 6, **caractérisé en ce que** la région (8, 8') de l'au moins un bras de raccordement (6, 6'), coudée vers l'avant dans la direction de conduite (7), s'étend approximativement horizontalement ou obliquement vers le bas, et est raccordée à la colonne B dans une région supérieure, centrale ou inférieure de celle-ci.

8. Système de protection contre le capotage selon l'une quelconque des revendications 2 à 7, **caractérisé en ce qu'**au moins l'un des composants du système de protection contre le capotage (2) est réalisé sous forme de profilé filé.

9. Véhicule automobile comprenant un système de protection contre le capotage (2) selon l'une quelconque des revendications 1 à 8.
